# EUROPEAN PATENT APPLICATION

(11) **EP 1 669 723 A1**
(43) Date of publication of application: **14.06.2006**
(21) Application number: 05027102.2
(22) Date of filing: 12.12.2005
(51) Int. Cl.: G01C 21/32, G09B 29/10

(54) **Map data updating server, relay device and system**

(30) Priority: 13.12.2004 JP 2004360080
(71) Applicant: AISIN AW CO., LTD., Anjo, Aichi 444-1192 (JP)
(72) Inventor: Nakamura, Norihiro, Okazaki Aichi 444-8564 (JP); Tsuchiya, Naoki, Okazaki Aichi 444-8564 (JP); Takahata, Seiji, Okazaki Aichi 444-8564 (JP)
(74) Representative: Vossius & Partner

(57) **Abstract**

Systems, methods, and programs for updating map data create differential data in a server (2) by comparing an old version of map data stored in the server (2) with a new version of map data and transmit the differential data from the server to a relay device (4). The systems, methods and programs create updated map data by combining the differential data received from the server (2) with map data previously stored in the relay device (4). The relay device (4) may then be connected to an updated data storing device that disconnectably connects to both the relay device and a navigation system (10). The systems, methods, and programs, may then transfer the updated map data from the relay device (4) to the updated data storing device and from the updated data storing device to the navigation system (10).

## Description

The disclosure of Japanese Patent Application No. 2004-360080 filed on December 13, 2004 including the specification, drawings and abstract is incorporated herein by reference in its entirety.

Related technical fields include map data updating systems, methods, and programs.

Conventional navigation systems include, for example, a search function that searches for a guide route from the current position to a destination and a route guidance function that indicates the host vehicle position and the guide route on a display. In order to execute these functions, the navigation system accesses road data (e.g.., node data, link data) corresponding to roads throughout Japan and map drawing data for displaying maps. This road data and map drawing data (hereinafter, this data will simply be referred to as "map data") is conventionally stored in an optical disk that can be read by the navigation system or stored in a hard disk provided as part of the navigation system.

Japanese Patent Application Publication No. JP-A-2000-36097 proposes a system that transmits map data directly from a host station to a mobile navigation system via a communication line or wireless communication. In order to reduce the amount of data transferred from the parent station to the mobile station, the system may transmits the difference between the old map data and the new map data from host station.

Navigation systems with internal hard disks are advantageous in that, for example, they can be made to have a large capacity. However, a convenient map data updating method is not yet in widespread use. That is, when updating map data stored in the hard disk, the user often must take the navigation system out of the vehicle in which it is mounted and send it to the manufacturer, which is extremely troublesome for the user.

With the system disclosed in Japanese Patent Application Publication No. JP-A- 2000-36097, the map data must be transmitted via wireless communication in order to update the data without removing the internal hard disk type navigation system. In this case, the volume of map data that must be transmitted is large so it places a transmission load on the network and communication costs are substantial.

Even when only differential data is transmitted, the navigation system of Japanese Patent Application Publication No. JP-A- 2000-36097 must perform time and resource intensive processing to create a new version of the map data based on the differential data and the old map data. Moreover, the navigation system must convert the differential data and the like to a data format that is usable in search processing. Accordingly, this places a load on the navigation system and requires a long time to update the map.

In view of at least the foregoing problems, it is beneficial provide, for example, a relay device, a server, a map data updating system, and a map data updating method which enables navigation system map data updating to be easily performed.

It is beneficial provide, for example, a relay device, a server, a map data updating system, and a map data updating method which enables the amount of data transferred when updating the map data to be reduced and the load on the navigation system to be decreased.

Systems, methods, and programs for updating map data create differential data in a server by comparing an old version of map data stored in the server with a new version of map data and transmit the differential data from the server to a relay device. The systems, methods and programs create updated map data by combining the differential data received from the server with map data previously stored in the relay device. The relay device may then be connected to an updated data storing device that disconnectably connects to both the relay device and the navigation system. The systems, methods, and programs, may then transfer the updated map data from the relay device to the updated data storing device and from the updated data storing device to the navigation system.

Exemplary implementations will now be described with reference to the accompanying drawings, wherein:

FIG. 1 is a schematic of an exemplary updated data delivery system;

FIG. 2 is a block diagram showing the configuration of an exemplary store terminal and server;

FIG. 3 shows exemplary management data provided in the server;

FIG. 4 is a block diagram showing the configuration of an exemplary navigation system;

FIG. 5 shows an exemplary differential data creating method;

FIG. 6 shows an exemplary differential data distributing method;

FIG. 7 shows an exemplary license information issuing method; and

FIG. 8 shows an exemplary navigation system data updating method.

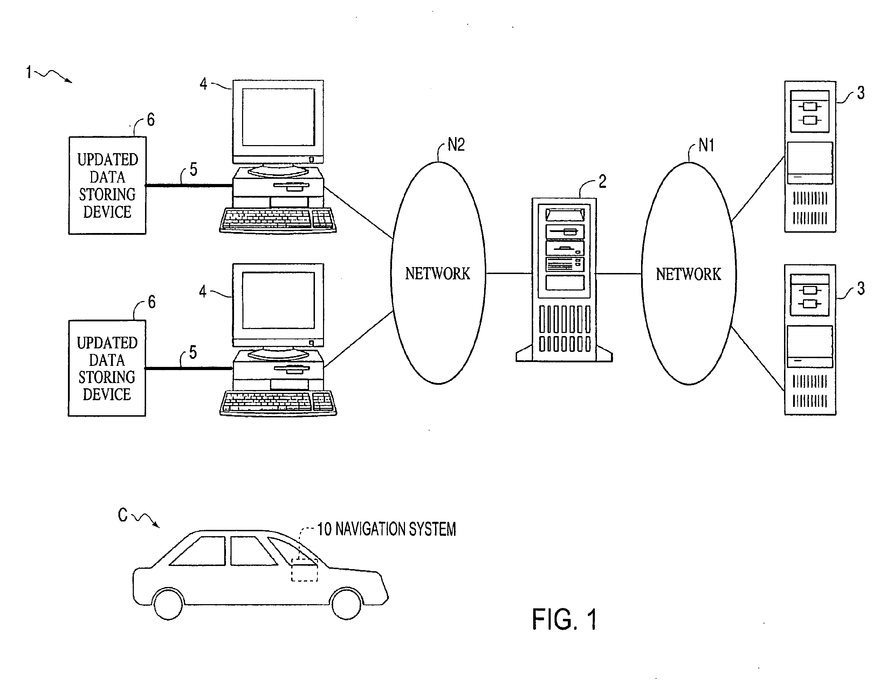

FIG. 1 shows an exemplary updated data delivery system 1 that may serve, for example, as a map data updating system. As shown in FIG. 1, the updated data delivery system 1 may include, for example, a server 2 and a distribution terminal 3. The server 2 and the distribution terminal 3 may be connected, for example, via a network N1 such as, for example, the Internet or a satellite connection. Each distribution terminal 3 may be a terminal, for example, owned by a different business or provider and each may have different map data. This map data may include, for example, road data corresponding to roads throughout Japan, drawing data for drawing roads and areas other than roads, and/or facility data.

The road data may include, for example, road type, road width, road name, intersection data, link data, and/or node data corresponding to the roads. The drawing data may include, for example, various data for drawing roads, rivers, bridges, and/or other map features. The facility data may include, for example, information relating to facilities and/or facility image data. The map data may be in a data format that is different from the data format used, for example, by a navigation system 10 mounted in a vehicle C searching for a route

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which the road type changes.

The map data may be updated multiple times a year, for example, to map data that reflects newly opened or closed roads, and/or newly established facilities. When the version of the map data is updated, the distribution terminal 3 may store the latest map data (i.e., the new version of the map data) in the server 2 by, for example, communication via the network N1.

The server 2 may be connected to each store terminal 4, which may serve as a relay device, via a network N2. Each store terminal 4 may be, for example, a terminal provided in a store or other provider such as a navigation system 10, an automotive dealer, and/or a gas station. This store terminal 4 may be connected to an updated data storing device (memory) 6, which may store updated data, via a cable 5. The updated data storing device 6 may house, for example, a hard disk. The network N2 may be made up of, for example, a satellite communication network that includes a relay, a communication satellite, and/or a communication line such as a private line or a public phone line. The network N2 may also be made up of one or a plurality of satellite communication, private lines and public communication lines. The networks N1 and N2, for example, may also be the same network. When the network N2 uses satellite communication, the server 2 and the store terminal 4 may both include, for example, a satellite communication antenna.

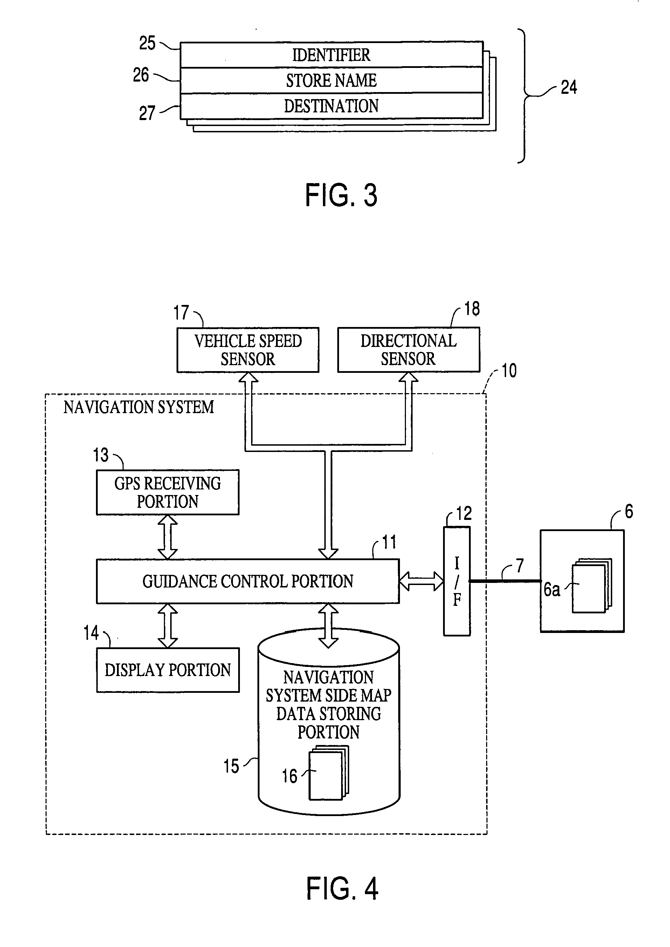

The updated data storing device 6 may be disconnected from the store terminal 4, for example, by disconnecting the cable 5. Once disconnected, the updated data storing device 6 can then be carried to the vehicle C and connected to the navigation system 10 via a cable 7 (see FIG. 4).

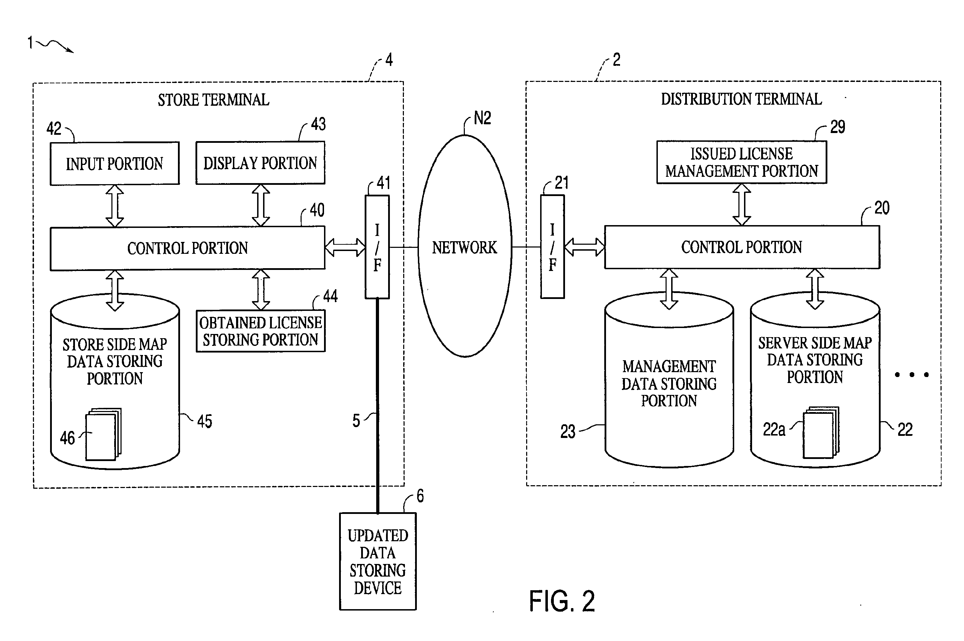

The configuration of the server 2 will now be described with reference to FIG. 2. FIG. 2 is a block diagram showing the configuration of an exemplary store terminal and server. As shown in FIG. 2, the server 2 may include a control portion (controller) 20 and an interface (I/F) 21 for connecting with the networks N1 and N2. The control portion 20 may be physically, functionally, or conceptually include, for example, a differential data creating portion, a transmission control portion, a license information transmission control portion, and/or a reception control portion. The server 2 may also include a plurality of server side map data storing portions (memories) 22 that serve as map data storing portions. (FIG. 2 shows only one server side map data storing portion 22 for the sake of simplicity). Each server side map data storing portion 22 may store server side map data 22a as map data. The server side map data 22a may have both common data and data (including programs) that differs for each server side map data storing portion 22.

The control portion 20 may include, for example, a CPU and/or RAM, and may have a differential data creating program. Upon receiving a new version of map data from each distribution terminal 3, the control portion 20 may, for example, select the server side map data storing portion 22 corresponding to that map data and read the old version of map data. The control portion 20 may then compare the read data with the new version of map data, detect different locations of the different versions of the map data, and create differential data for the data type for which a difference can be created, according to the differential data creating program described above.

The server 2 may include, for example, a management data storing portion (memory) 23. This management data storing portion 23 may store, for example, various management data 24 (see FIG. 3). The server 2 may also include an issued license management portion (controller) 29 that serves as a license information transmission controlling portion. The issued license management portion 29 may store, for example, a program for creating license information for using the updated map data and/or a license information creation history, and the like. The license information may include, for example, an encryption key and can be decrypted by the navigation system 10.

The data configuration of the management data 24 will now be described with reference to FIG. 3. FIG. 3 shows exemplary management data provided in the server. As shown in FIG. 3, the management data 24 may be created for each store or store terminal 4, and may include, for example, an identifier 25, a store name 26, and/or a destination 27. The identifier 25 may be an identifier for identifying the management data 24. The store name 26 may be the name of the store and the destination 27 may be, for example, the address used when transmitting license information to the store terminal 4.

Returning to FIG. 2, the configuration of the store terminal 4 will be described. The store terminal 4 may include, for example, a control portion (controller) 40, an interface (I/F) 41 that can connect with the network N2, an input portion 42 such as a keyboard, and/or a display portion 43 that includes a display. The control portion 40 may functionally, physically, and/or conceptually include an updated data creating portion, a data transferring portion, a data converting portion, and/or a license information transferring portion. The control portion 40 may include a CPU and/or RAM, and may connect with the updated data storing device 6 via the interface 41 and the cable 5 as described above. The store terminal 4 may include an obtained license storing portion (memory) 44 which temporarily stores the license information received from the server 2.

The store terminal 4 may also include a store side map data storing portion (memory) 45 which serves as, for example, a relay side map data storing portion. The store side map data storing portion 45 may store store side map data 46 as relay side map data. Upon receiving the differential data described above from the server 2, the control portion 40 may use the differential data and the store side map data 46 stored in the store side map data storing portion 45 to create map data for updating that is converted to a data format usable for search processing and the like by the navigation system 10, according to the updated data creating program.

Next, the navigation system 10 that may be mounted in the vehicle C will be described with reference to FIG. 4. FIG. 4 is a block diagram showing the configuration of an exemplary navigation system. The navigation system 10 may include, for example, a guidance control portion (controller) 11 and an interface (I/F) 12. The guidance control portion 11 may be connected to the updated data storing device 6 via the interface 12 and a cable 7.

The navigation system 10 may also include, for example, a GPS (Global Positioning System) receiving portion 13 and a display portion 14 that includes, for example, a touch panel. The guidance control portion 11 may detect the position of the host vehicle based on, for example, the GPS receiving portion 13, a directional sensor 18, and/or a vehicle speed sensor 17 provided in the vehicle C.

The navigation system 10 may include, for example, a navigation system side map data storing portion 15 that stores navigation system side map data 16. The navigation system side map data 16 may include road data and/or drawing data similar to the map data provided in the distribution terminal 3 and the server 2; but the data format of the navigation system side map data 16 is different, i.e., the data format of this data is such that computing and processing such as search processing by the navigation system 10 may be performed. The guidance control portion 11 may, for example, search for the guide route from the host vehicle position to the destination using the navigation system side map data 16. The guidance control portion 11 may also read the navigation system side map data 16 (drawing data) for the area around the host vehicle position, display the host vehicle position and a map image on the display portion 14, and/or display an indicator indicating the guide route.

The guidance control portion 11 of the navigation system 10 may, for example, decrypt and encrypt the license information stored in the updated data storing device 6. When the appropriate license information is stored in the updated data storing device 6, the guidance control portion 11 may read map data for updating 6a that is stored in the updated data storing device 6, and update, by over-writing, the navigation system side map data 16 stored in the navigation system side map data storing portion 15. When, for example, the license information includes data for which the number of writable times or the like is encrypted, that data is updated based on a prescribed rule.

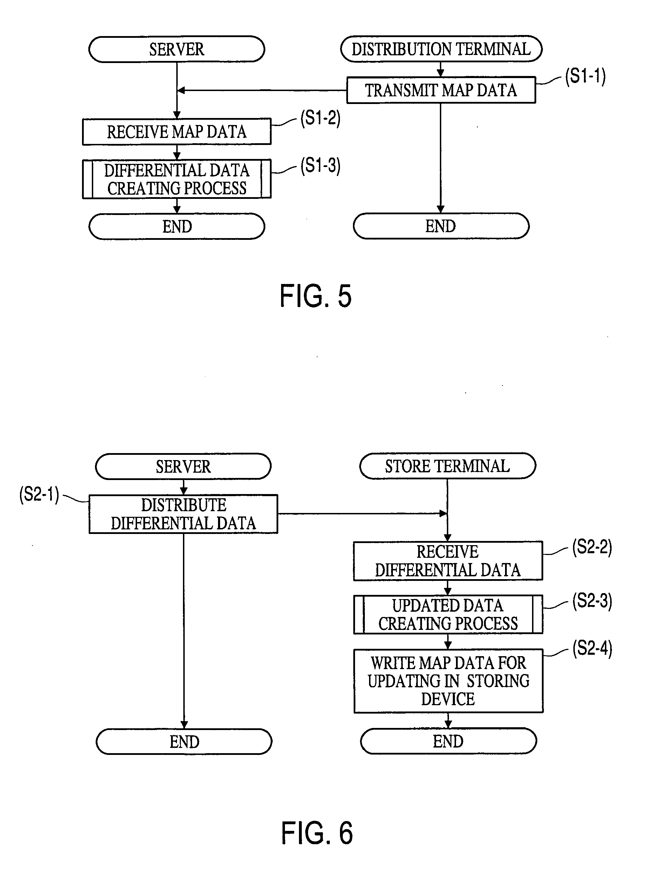

Next, an exemplary differential data creating method, for example, executed by the control portion 20 of the server 2 will be described with reference to FIG. 5. The exemplary method may be implemented, for example, by one or more components of the above-described systems. However, even though the exemplary structure of the above-described systems may be referenced in the description of the method, it should be appreciated that the referenced structure is exemplary and the exemplary process need not be limited by any of the above-described exemplary structure.

As described above, when new map data is created by a business that creates map data, that new version of map data may be transmitted from the distribution terminal 3 to the server 2 via, for example, the network N1 (step S1-1).

Upon receiving the map data from the distribution terminal 3 (step S1-2), the control portion 20 of the server 2 may read the stored map data from the server side map data storing portion 22 which corresponds to that map data. The control portion 20 of the server 2 may then perform a differential data creating process (step S1-3) to create differential data based on the old version of map data that was read and the new version of map data that was received.

The control portion 20 may then detect different locations by comparing the old version of the map data and the new version of the map data, of the data type for which a difference can be detected within the various data included in the map data. The control portion 20 may create differential data by combining the data of differences corresponding to those different locations with the data for which differences are unable to be detected. At this time, the control portion 20 may assign the version information of the new version of map data to the differential data. As a result, the amount of the differential data is far less than that of all of the map data. Then the control portion 20 may end the differential data creating process. At this time, the control portion 20 may store the new version of map data that was received in the server side map data storing portion 22.

Continuing on, the server 2 may perform a differential data distributing process such as for example, the exemplary data distributing method shown in FIG. 6. The exemplary method may be implemented, for example, by one or more components of the above-described systems. However, even though the exemplary structure of the above-described systems may be referenced in the description of the method, it should be appreciated that the referenced structure is exemplary and the exemplary method need not be limited by any of the above-described exemplary structure.

After creating the differential data, the control portion 20 of the server 2 may transmit it to each store terminal 4 by satellite communication at a specified timing (step S2-1). At this time, the differential data may be transmitted quickly and at a low cost to many store terminals 4 using satellite communication, but other lines may also be used. A storage medium such as an optical disk on which the differential data is stored may be sent to store terminals 4 that are not connected to a communication line network.

The control portion 40 of the store terminal 4 may receive the differential data corresponding to the store side map data 46 provided in the store terminal 4 (step S2-2). Alternatively, the store terminal 4 may read the differential data from the storage medium on which it is stored. Then, an updated data creating process may be performed (step S2-3). In this updated data creating process, the control portion 40 may use the differential data received from the server 2 and the store side map data 46 stored in the store side map data storing portion 45 to create new store side map data 46 in a data format that can be used for processing by the navigation system 10. Also, the control portion 40 may assign the version information that was assigned to the differential data to the store side map data 46.

When the new store side map data 46 is created, the control portion 40 may replace the old version of the store side map data 46 with the new store side map data 46 and write that new store side map data 46 as map data for updating 6a into the updated data storing device 6 via the interface 41 and the cable 5 (step S2-4). As a result, the latest map data, which includes the differential data, is stored in the updated data storing device 6 and the store side map data storing portion 45.

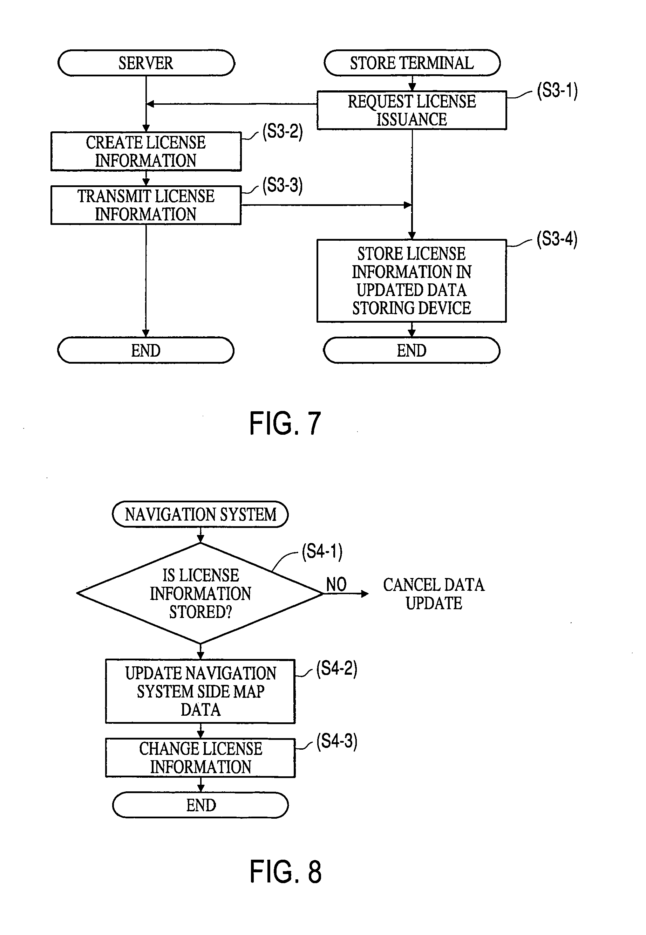

Next, an exemplary license information issuing method will be described with reference to FIG. 7. The exemplary method may be implemented, for example, by one or more components of the above-described systems. However, even though the exemplary structure of the above-described systems may be referenced in the description of the method, it should be appreciated that the referenced structure is exemplary and the exemplary method need not be limited by any of the above-described exemplary structure.

The individual in charge at the store may operate the input portion 42 of the store terminal 4 and may send a license issuance request to the server 2 (step S3-1) when, for example, notification is transmitted from the server 2 to the store terminal 4 at the time, for example, differential data my be distributed from the server 2 to the store terminal 4. At this time, the store terminal 4 may also transmit the identifier 25 and/or the store name 26 in the management data 24 provided in each terminal. When the server 2 receives this request, the control portion 20 of the server 2 may create license information using the issued license management portion 29 (step S3-2).

The control portion 20 may then transmit the created license information to the store terminal 4 via the network N2 based on the destination 27 stored in the management data 24 (step S3-3). The amount of data of the license information to be transmitted may be small and the license information may be transmitted to a specific store terminal 4 so the control portion 20 may transmit it via a communication line such as the Internet.

Upon receiving the license information, the control portion 40 of the store terminal 4 may temporarily store it in the obtained license storing portion 44. Then the control portion 40 may store the obtained license information in the updated data storing device 6 via the cable 5 based on, for example, a predetermined timing or an operation of the input portion 42 by the individual in charge at the store (step S3-4). As a result, the license information may be stored in the updated data storing device 6.

Next, an exemplary navigation system data updating method will be described with reference to FIG. 8. The exemplary method may be implemented, for example, by one or more components of the above-described systems. However, even though the exemplary structure of the above-described systems may be referenced in the description of the method, it should be appreciated that the referenced structure is exemplary and the exemplary method need not be limited by any of the above-described exemplary structure.

When updating the navigation system side map data 16 of the navigation system 10, the individual in charge at the store, for example, may disconnect the updated data storing device 6 in which the latest map data for updating 6a is stored from the store terminal 4 and carry it to the vehicle C. The updated data storing device 6 may then be connected to the navigation system 10 via the cable 7. The updating of the map data may be started by operating, for example, a switch (not shown) or the display portion 14 of the navigation system 10.

Upon receiving a map data update command, for example, by an input operation of the display portion 14 or the switch, the guidance control portion 11 of the navigation system 10 may access the updated data storing device 6 and determines whether the license information is stored (step S4-1). If the license information is not stored (step S4-1 = NO), data updating is cancelled, thus preventing unauthorized transferal of map data to the navigation system 10.

Also at this time, the guidance control portion 11 may detect the version information assigned to the map data for updating 6a stored in the updated data storing device 6. The guidance control portion 11 may compare that version information with the version of the navigation system side map data 16 stored in the navigation system side map data storing portion 15, and determines whether the map data for updating 6a is a newer version than the navigation system side map data 16. If the version of the map data for updating 6a is newer than the version of the navigation system side map data 16, the process proceeds on to step S4-2. If the version of the map data for updating 6a is the same as that of the navigation system side map data 16, data updating is cancelled, thus preventing the updating process from being needlessly executed despite the fact that the versions are the same.

If it is determined that the appropriate license information is stored in the updated data storing device 6 (S4-1 = YES), then the guidance control portion 11 may read the map data for updating 6a from the updated data storing device 6 and replace the navigation system side map data 16 stored in the navigation system side map data storing portion 15 with the map data for updating 6a, thereby updating the navigation system side map data 16 (step S4-2). When the data updating ends, the guidance control portion 11 may change the license information stored in the updated data storing device 6 (step S4-3). At this time, the license information may be erased or the decrypted data is changed.

When the data updating process ends, the navigation system 10 may provide notification of that fact by, for example, outputting an indicator such as "data updating complete" to the display portion 43. Then, the individual in charge at the store, for example, may disconnect the updated data storing device 6 from the navigation system 10. This completes the map data updating of the navigation system 10.

The foregoing steps may then be repeated between the distribution terminal 3, the server 2, the store terminal 4, and the navigation system 10 every time a new version of the map data is produced.

The following effects may be obtained from the foregoing examples.

The updated data delivery system 1 for updating navigation system side map data 16 in the navigation system 10 may include the server 2 that has the server side map data storing portion 22. The updated data delivery system 1 may also include the store terminal 4 that has the store side map data storing portion 45 and that connects with the server 2 via the network N2. When updating the navigation system side map data 16 of the navigation system 10, the control portion 20 of the server 2 may compare the server side map data 22a with the new version of map data newly obtained from the distribution terminal 3, create differential data, and transmit that differential data to the store terminal 4. Therefore, it is possible to reduce the amount of data transmitted from the server 2 to the store terminal 4 in order to update the map data. Accordingly, data transfer can be completed in a short time.

The control portion 40 of the store terminal 4 may create the map data for updating 6a using the differential data received from the server 2 and the store side map data 46 stored in the store side map data storing portion 45. The control portion 40 then stores the created map data for updating 6a in the updated data storing device 6 that disconnectedly connects to the store terminal 4 via the cable 5. The updated data storing device 6 can also be connected to the navigation system 10 via the cable 7 so that the navigation system side map data 16 can be updated using the map data for updating 6a by connecting the updated data storing device 6 to the navigation system 10 that is mounted in the vehicle C. Therefore, the map data can be updated without having to remove the navigation system 10 from the vehicle C. Also, the store terminal 4 may integrate the differential data and the store side map data 46 and creates the latest version of map data in advance, so the load from computing and processing on the navigation system 10 can be reduced.

When the control portion 40 of the store terminal 4 creates the map data for updating 6a, the map data for updating 6a may be converted to the same data format as the navigation system side map data 16 provided in the navigation system 10. Therefore, the navigation system 10 only needs to read the map data for updating 6a stored in the updated data storing device 6 and replace the old version of the navigation system side map data 16 with it. Accordingly, the data format conversion processing is shared with the store terminal 4 so the load from computing and processing on the navigation system 10 can be reduced.

The server 2 may transmit license information for approving a data update to the store terminal 4. Also, the store terminal 4 may store received license information in the updated data storing device 6. Moreover, before reading the map data for updating 6a, the navigation system 10 may confirm the existence or absence of the license information and may perform data updating only if license information is stored. If there is no license information, the data updating is cancelled. Therefore, unauthorized writing and the like of map data for updating 6a can be prevented even when data for updating is sent and received between the server 2 and the navigation system 10.

The server 2 may receive different map data from a plurality of the distribution terminals 3 each having map data. Also, the server 2 may include server side map data storing portions 22 that store different map data. Accordingly, the server 2 is able to centrally manage different types of map data so differential data can be distributed to a greater number of store terminals 4.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

For example, as discussed above, the navigation system 10 may be made to be able to decrypt the license information. Alternatively, however, the store terminal 4 may be made to be able to decrypt the license information.

As discussed above, the navigation system 10 may change the license information (step S4-3) after reading the map data for updating 6a. Alternatively, however, the navigation system 10 may erase the map data for updating 6a stored in the updated data storing device 6. In this case, the store terminal 4 may receive the differential data from the server 2, create the map data for updating 6a, and store that map data for updating 6a in the updated data storing device 6 every time the data in the navigation system 10 is to be updated. When this is done, the license information issuing process can be omitted.

The navigation system 10 may also perform conversion processing of the data format of the map data for updating 6a.

The server 2 may also perform the differential data distributing process when it has received a data request from the store terminal 4. Also, at the point when differential data is created, that differential data may be automatically transmitted to the store terminal 4.

As discussed above, the server 2 receives the map data from a plurality of distribution terminals 3. However, it may also receive it from only one distribution terminal 3. At this time, the distribution terminal 3 and the server 2 may also be integrated.

The updated data storing device 6 may be a storage medium other than a socalled external hard disk, such as, for example, an optical disk.

As discussed above, the server 2 may include a license issuing function and a differential data creating function. Alternatively, however, there can be one server provided with a license issuing function and another server provided with a differential data creating function. In this case, the issued license management portion 29 and the management data storing portion 23 may be provided in the license issuing server and the server side map data storing portions 22 may be provided in the differential data creating server. Each of these servers may then be connected to the store terminal 4 via the network N2. As a result, the processing operations can be shared, which enables the load on each server to be reduced.

## Claims

1. A server (2) for updating map data, comprising:
a memory (22) that stores map data (22a); and
a controller (20) that:
creates differential data by comparing the map data stored in the memory with a new version of map data; and
transmits the differential data to a relay device (4);
wherein the server is connected, via a network (N2), to the relay device.

2. A relay device (4) for updating map data, comprising:
a controller (40) that:
receives differential map data from a server (2), the differential map data including the difference between a new version of map data and an old version of map data; and
creates updated map data (6a) by updating outdated portions of previously stored map data (46) with the differential map data;
a memory that stores the updated map data; and
a data transferring portion (40) that is configured to be disconnectably connected to an updated data storing device (6), the updated storing device usable to connect the relay device and a navigation system (10).

3. The relay device of claim 2, wherein the controller:
converts the updated map data to a data format useable by the navigation system.
transmits the updated map data to the updated data storing device.

4. The relay device of claim 2 or 3, wherein the controller:
receives license information from the server, the license information required to transmit the updated map data from the updated data storing device to the navigation system.
transmits the license information to the updated data storing device.

5. A map data updating system, comprising:
the relay device of claim 2, 3 or 4, and
a server, the server comprising:
a memory that stores the old version of map data; and
a controller that:
creates the differential data by comparing the map data stored in the memory with a new version of map data ; and
transmits the differential data to a relay device;
wherein the server is connected, via a network, to the relay device.

6. The map data updating system of claim 5, wherein the relay device controller:
converts the updated map data to a data format useable by the navigation system.

7. The map data updating system of claim 5 or 6, wherein:
the server controller transmits license information to the relay device, the license information required to transmit updated map data from an updated data storing device to a navigation system; and
the relay device controller transmits the license information to the updated data storing device.

8. The map data updating system of claim 5, 6 or 7, wherein the server controller receives a new version of data from a plurality of distribution terminals, the server further comprising:
at least one memory, each at least one memory storing different map data transmitted from a respective one of the plurality of distribution terminals.

9. The map updating system of claim 5, 6, 7 or 8, comprising the server of claim 1 and/or the relay device of claim 2, 3 or 4.
